# EUROPEAN PATENT SPECIFICATION

(11) **EP 1 530 021 B1**
(45) Date of publication and mention of the grant of the patent: **11.05.2011**
(21) Application number: 03788004.4
(22) Date of filing: 06.03.2003
(51) Int. Cl.: G01B 3/10

(54) **MEASURE TAPE**
BANDMASS
RUBAN DE MESURE

(30) Priority: 06.08.2002 JP 2002228960
(43) Date of publication of application: 11.05.2005
(73) Proprietor: MURATEC-KDS CORP, Kyoto-shi Kyoto 601-8036 (JP)
(72) Inventor: USAMI, Tsutomu, c/o KDS Corporation, Kyoto-shi, Kyoto 601-80 36 (JP)
(74) Representative: Grünecker, Kinkeldey, Stockmair & Schwanhäusser Anwaltssozietät
(86) International application number: PCT/JP2003/002683
(87) International publication number: WO 2004/017017

(56) References cited:
- EP-A- 0 779 496
- JP-A- 6 180 201
- JP-A- 8 005 302
- JP-A- 2000 193 403
- US-A- 4 663 854
- US-A- 5 400 520

## Description

### FIELD OF THE INVENTION

The present invention relates to an auto-returning type tape measure which can automatically draw its measuring tape into a case body (housing) by a force of a winding spring.

### BACKGROUND OF THE INVENTION

Length and distance are usually measured with a measuring tape which can be drawn manually or automatically into a tape measure case. The drawing portion of the auto-returning type tape measure which draws automatically the measuring tape drawn out from the case incorporates a tape winding drum being urged in the tape winding direction by a force of a returning spring. The measuring tape used in an auto-returning type tape measure may be of steel sheet, cloth, plastic, etc. The cross section of the measuring tape is arcuated symmetrically about longitudinal axis and possesses the nature of straightening while it is drawn from the tape measure case.

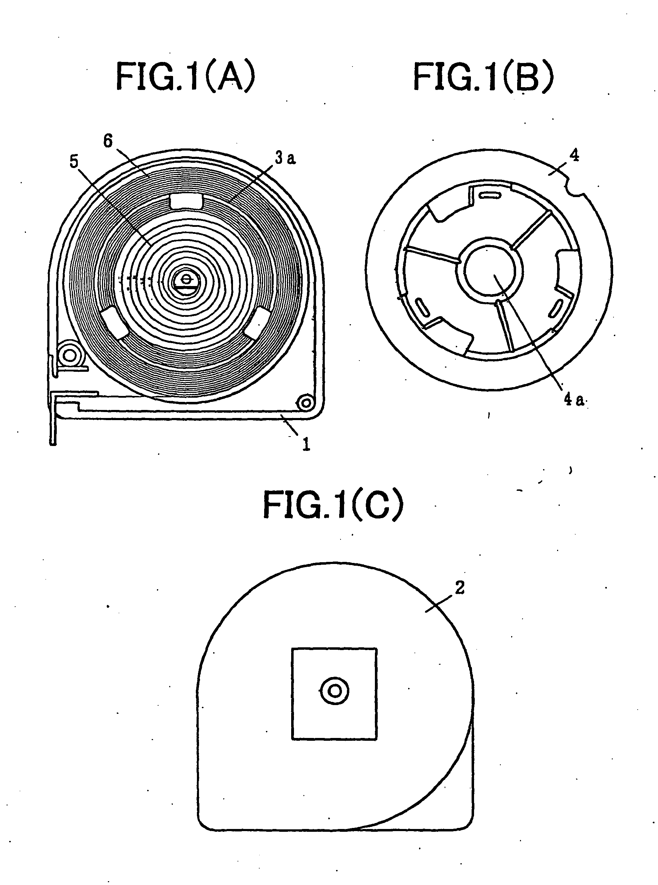

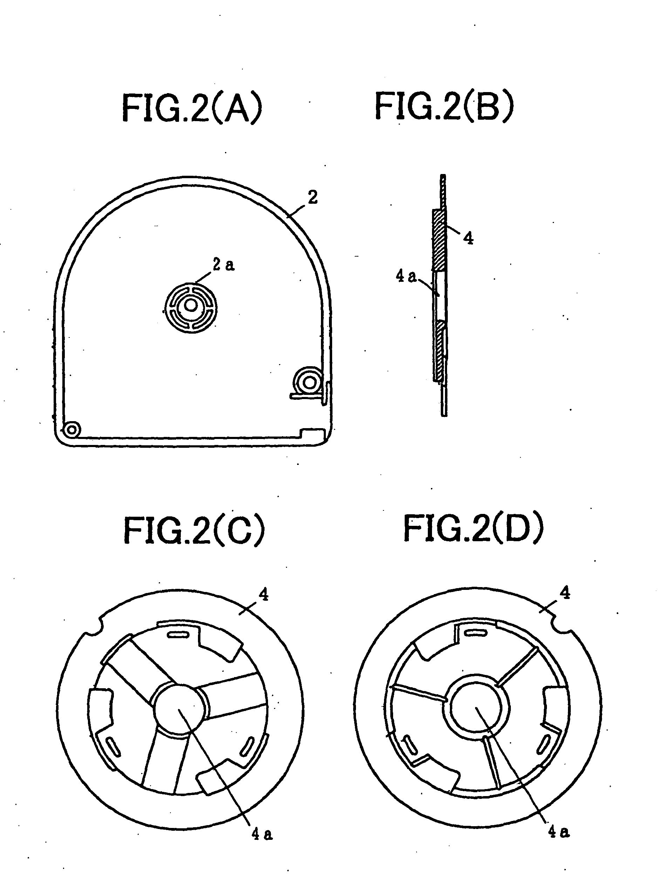

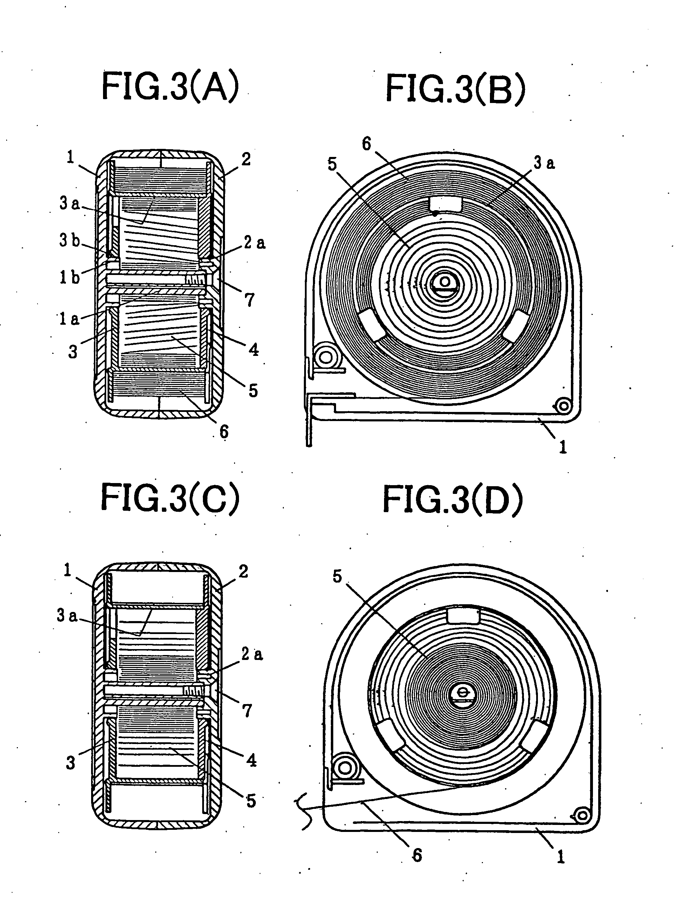

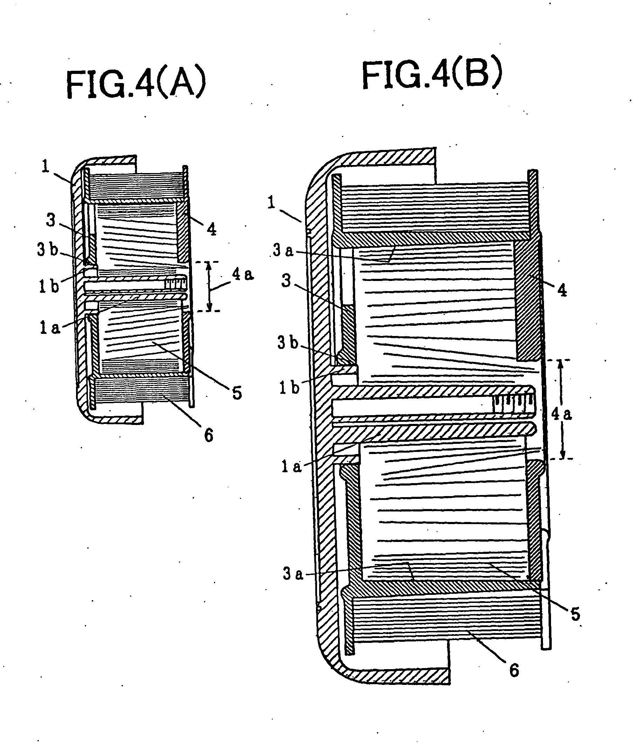

In Figs. 1 to 4, there is illustrated a conventional auto-returning type tape measure. Fig. 1 (Fig. 1(A)-Fig.1(C)) is a plan view of the tape measure in an exposed state with a removed cover of a case and a removed cover of a drum. Fig 1(A) is a plan view of the case body with a tape winding drum body mounted therein, Fig. 1(B) is a plan view of a drum cover, and Fig. 1(C) is a plan view of a case cover. Fig. 2 (Fig. 2 (A)-Fig. 2(D)) illustrates a case cover and a drum cover. Fig. 2(A) is an inside view of the case cover, Fig. 2(B) is a sectional view of the drum cover, Fig. 2(C) is a left side view of the drum cover of Fig. 2(B), and Fig. 2(D) is a right side view of the drum cover of Fig. 2 (B). Fig.3 (Fig. 3(A)-Fig. 3(D)) is a view for illustrating the drawing of a measuring tape from a tape measure case. Fig. 3 (A) is a sectional view of the tape measure before drawing the measuring tape from the case, Fig. 3(B) is a plan view for showing the tape measure of Fig. 3(A) with the covers removed from the case and the drum, which corresponds to that of Fig. 1(A). Fig. 3(C) is a sectional view of the tape measure with a measuring tape drawn almost to the end from the case. Fig. 3(D) is a plan view of the tape measure with the covers removed from the case and the drum in the state shown in Fig. 3(C). Fig. 4 (Fig. 4(A), 4(B)) is a view for illustrating the operation of the tape measure. In Figs. 1 to 4, there is shown a case body 1, a fixed shaft 1a, a supporting shaft 1b, a case cover 2, a supporting shaft 2a, a drum body 3, partition wall 3a, a hole 3b for the supporting shaft 1b, a drum cover 4, a bearing hole 4a, a driving spring 5, a measuring tape 6 and a fixing screw 7.

Referring to Figs. 1 to 3, the construction of the conventional tape measure is explained below. A case body 1 has in its center portion a fixed shaft 1a and a supporting shaft 1b, both of which are formed integrally thereat. The case cover 2 is provided with a supporting shaft 2a formed integrally therewith. The case composed of the case body 1 and the case cover 2 incorporates a winding drum comprising a drum body 3 and a drum cover 4. The drum body 3 has a partition wall portion 3a forming a drum for holding a measuring tape 6 wound thereon and also forming an internal chamber incorporating therein a driving spring 5.

The drum body 3 has a hole 3b formed in its center for fitting in a disc-shaped supporting shaft 1b formed on the inner wall of the case body 1. The driving spring 5 is secured at its inner end to the fixed shaft 1a and wound full length around the fixed shaft 1a. It is also secured at its outer end to the drum body 3 and connected to the measuring tape 6. The tape measure is assembled by covering the drum body 3 with the drum cover 4 and the case cover 2 and then securing with a fixing screw 7 to the case 1. In the assembled state of the tape measure, the supporting shaft 2a formed on the inside surface of the case cover 2 is fitted in the bearing hole 4a formed in the center of the drum cover 4 (see Fig. 2(B)). Thus, the supporting shaft 2a supports the drum body 3 by the bearing hole 4a formed in the center of the drum cover 4 and the fixed shaft 1a has its end fitted in the center hole.

When the measuring tape 6 wound around the winding drum is drawn from the case, as shown in Figs. 3(C) and 3(D), the driving spring 5 is tightened in the direction perpendicular to the axis of the fixed shaft 1a. The measuring tape 6 can be rewound automatically into the case by the effect of the accumulated force of the spring 5.

When the winding drum is rotated by drawing out the measuring tape 6 from the case, the driving spring 5 is more tightly wound around the fixed shaft 1a, vigorously vibrating in the horizontal direction of the fixed shaft 1a and being wound tightly in the vertical direction of the fixed shaft 1a. When the drawn measuring tape 6 is released, the accumulated force of the driving spring 5 is released and unwound outward toward the partition wall 3a causing the drum to rotate in the direction of rewinding the measuring tape 6. In this case, the spring 5 vigorously vibrates in the horizontal direction of the fixed shaft 1a and loosens in the vertical direction of the fixed shaft 1a.

The movement of the driving spring 5 may generate unpleasant sound for user by interfering with the disk-shaped supporting shaft 2a provided on the inner wall of the case cover 2 and the bearing hole 4a made in the drum cover 4. The vibration of the driving spring 5 in the horizontal direction along the fixed shaft 1a also generates unpleasant sound for user by striking the inner wall of the drum cover 4. The driving spring 5 may be caught by the supporting shaft 2a or in the bearing hole 4a, making it impossible to draw the measuring tape 6 into/from the case of the tape measure smoothly.

Referring to Fig. 4, the above problems will be examined below in detail. Fig. 4(A) shows the tape measure shown in Fig. 3 (A) but in the exposed state with the case cover 2 removed. Fig. 4 (B) shows an enlargement of the bearing hole 4a of the tape measure shown in Fig. 4 (A), indicating that a part of the driving spring 5 falls in the bearing hole 4a. In the case body 1 and the drum body 3, the fixed shaft 1a has a slightly tapered end inclining to an axial line in the section and the partition wall portion 3a is also slightly tapering on the side for mounting the drum cover 4, which is slightly inclining to an axial line in the section of the tape measure. Fig. 4(B) illustrates exaggeratingly the inclined state of the fixed shaft 1a and the partition wall portion 3a. The reason why the fixed shaft 1a and the partition wall 3a are not parallel to the axial line but slightly tilted from the axial line of the tape measure consists in making it easier to take out the case body 1 and the drum body 3 formed of synthetic resin from molding tools. Since the fixed shaft 1a is tapering, there may be caused a force effecting on the driving spring 5 to be wound around the fixed shaft 1a in the direction of the side on which the drum cover 4 mounted, i.e., from the base portion to the tapered end of the fixed shaft 1a as shown in Fig. 4(B). Consequently, the driving spring 5 to be wound around the fixed shaft 1a may fall into the bearing hole 4a of the drum cover 4 in the state of the tape measure with the case cover 2 removed. The number of turns of the driving spring 5, tightly wound around the fixed shaft 1a, may be of 2 to 4 when the measuring tape 6 is not drawn from the case as shown in Figs. 3 (A), 4(A) and 4(B). As the measuring tape 6 is drawn from the tape measure case, the number of tightened turns of the driving spring 5 on the fixed shaft is increased. When the tape is drawn almost full length from the case, the most turns of the driving spring 5 are tightly wound around the fixed shaft 1a as shown in Figs. 3(C) and 3(D). Therefore, in the bearing hole 4a of the drum cover 4, when the measuring tape 6 is drawn out/into the tape measure case, the turns of the driving spring 5 are tightened or loosened, and, at the same time, may slide along the fixed shaft and interfere with the periphery of the supporting shaft 2a and the inside surface of the bearing hole 4a of the drum cover 4, generating unpleasant noise. The driving spring 5 may vigorously vibrate in the horizontal direction of the fixed shaft 1a and also generate unpleasant sound by striking the inside wall of the drum cover 4 and the inner side of the supporting shaft 2a. Furthermore, the driving spring 5 may be caught in the supporting shaft 2a, bearing hole 4a, and especially in a gap between the supporting shaft 2a and the bearing hole 4a, causing the measuring tape 6 not to be smoothly drawn from/into the tape measure case. Attempts have been made to solve the above problems but still have not attained sufficient results.

In view of the foregoing circumstances of the conventional art, the present invention was made to provide a tape measure capable of working with effectively preventing the occurrence of unpleasant sound when drawing the measuring tape from/into the case.

### SUMMARY OF THE INVENTION

An object of the present invention is to provide a tape measure comprising: a drum body wherein a side wall is formed on one surface and another surface is opened to be substantially cylindrical, a surrounding surface of the cylinder is a partition wall, the side wall is extended to the outside of the partition wall, a driving spring is accommodated inside of the partition wall and a measuring tape is wound outside of the partition wall; a drum cover for covering the opened surface of the drum body; and a shaft disposed in the center portion of the drum body and the drum cover, characterised in that a relief hole is made in the center portion of the drum cover and has an inside diameter being larger than the outer diameter of the shaft by 3 to 11 mm to form a empty space therein.

Another object of the present invention is to provide a tape measure comprising: a drum body wherein a side wall is formed on one surface and another surface is opened to be substantially cylindrical, a surrounding surface of the cylinder is a partition wall, the side wall is extended to the outside of the partition wall, a driving spring is accommodated inside of the partition wall and a measuring tape is wound outside of the partition wall; a drum cover for covering the opened surface of the drum body; and a shaft disposed in the center portion of the drum body and the drum cover, characterised in that a relief hole is made in the center portion of the drum cover and has an inside diameter being larger than 0.5 times of the outer diameter of a tightened coil of the driving spring to form an empty space therein in the state when the measuring tape was drawn full length from the tape measure case.

Another object of the present invention is to provide a tape measure comprising: a drum body wherein a side wall is formed on one surface and another surface is opened to be substantially cylindrical, a surrounding surface of the cylinder is a partition wall, the side wall is extended to the outside of the partition wall, a driving spring is accommodated inside of the partition wall and a measuring tape is wound outside of the partition wall; a drum cover for covering the opened surface of the drum body; and a shaft disposed in the center portion of the drum body and the drum cover, characterised in that a relief hole is made in the center portion of the drum cover and has an inside diameter large enough to allow a part of the driving spring to fall therein in the state when the driving spring is tightened by drawing the measuring tape by 2 meters from the tape measure case.

### BRIEF DESCRIPTION OF THE DRAWINGS

Fig. 1 is a plan view of a conventional auto-returning type tape measure in the exposed state with a removed case cover and a removed drum cover: Fig 1(A) is a plan view of the case body with a tape winding drum mounted therein; Fig. 1(B) is a plan view of a drum cover; and Fig. 1(C) is a plan view of a case cover.
Fig. 2 illustrates a case cover and a drum cover of the tape measure of Fig. 1 : Fig. 2(A) is an inside view of the case cover; Fig. 2(B) is a sectional view of the drum cover; Fig. 2(C) is a left side view of the drum cover of Fig. 2(B); and Fig. 2(D) is a right side view of the drum cover of Fig. 2(B).
Fig. 3 is a view for illustrating the states of drawing a tape from a case of the tape measure of Fig. 1: Fig. 3(A) is a sectional view for illustrating the tape measure before drawing the measuring tape from the case; Fig. 3(B) is a plan view for showing the tape measure of Fig. 3(A) with the covers removed from the case and the drum; Fig. 3(C) is a sectional view of the tape measure with a tape drawn almost full length from the case; and Fig. 3(D) is a plan view of the tape measure of Fig. 3(C) with the covers removed from the case and the drum.
Fig. 4 is a view for illustrating the operation of the tape measure of Fig. 1.

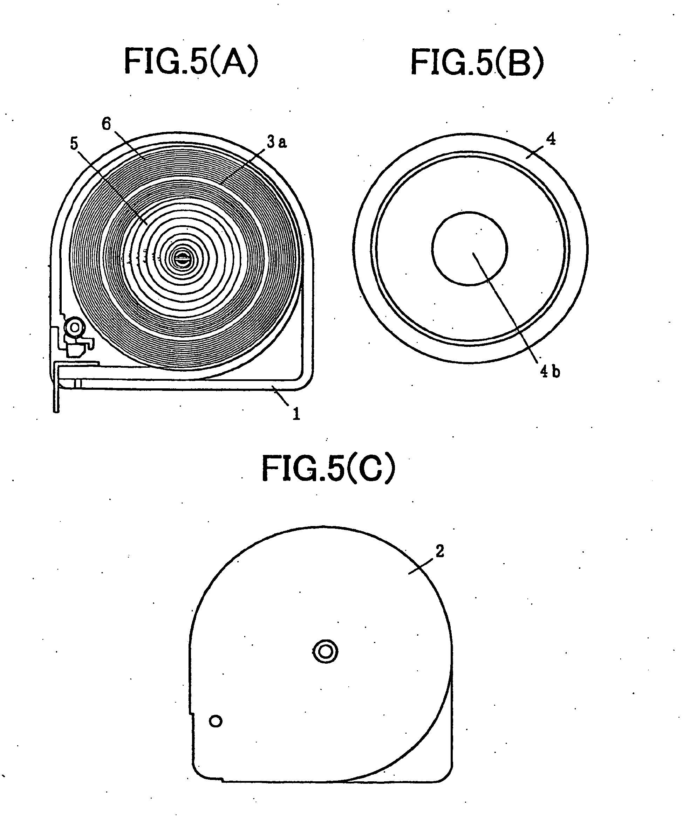

Fig. 5 is a plan view for illustrating an auto-returning type tape measure in the exposed state with a removed case cover and a removed drum cover, which is the first embodiment of the present invention: Fig. 5 (A) is a plan view of the case body with a tape winding drum mounted therein; Fig. 5(B) is a plan view of the drum cover; and Fig. 5(C) is a plan view of the case cover.

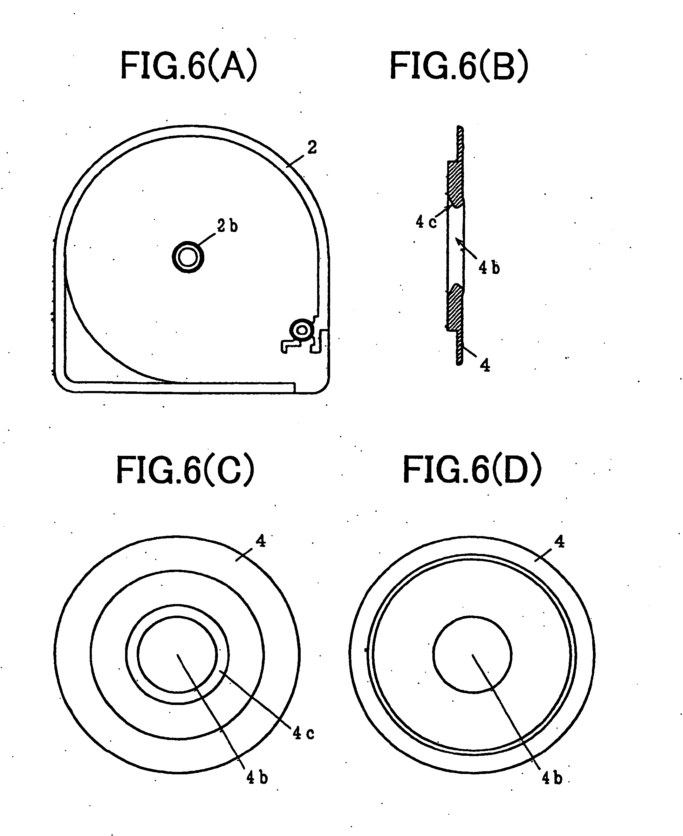

Fig. 6 illustrates a case cover and a drum cover of the tape measure of Fig. 5: Fig. 6(A) is an inside view of the case cover; Fig. 6(B) is a sectional view of the drum cover; Fig. 6(C) is a left side view of the drum cover of Fig. 6(B); and Fig. 6(D) is a right side view of the drum cover of Fig. 6(B).

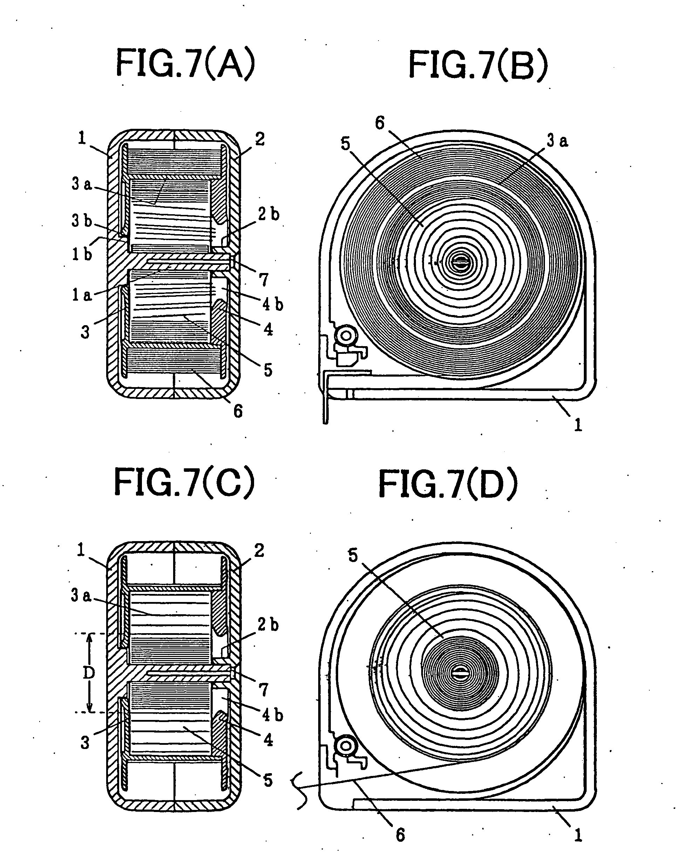

Fig. 7 is a view for illustrating states of drawing a tape from a tape measure case of Fig. 5: Fig. 7(A) is a sectional view for illustrating the tape measure before drawing the measuring tape from the case; Fig. 7(B) is a plan view for showing the tape measure of Fig. 7(A) with the covers removed from the case and the drum; Fig. 7(C) is a sectional view of the tape measure with a measuring tape drawn almost full length from the case; and Fig. 7(D) is a plan view of the tape measure of Fig. 7(C) with the covers removed from the case and the drum.

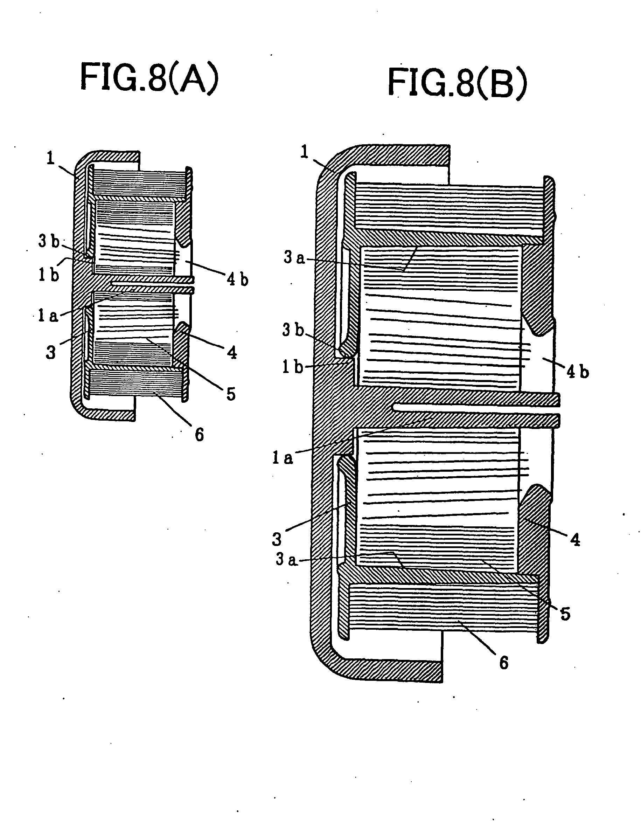

Fig. 8 is a view for illustrating the operation of the tape measure of Fig. 5.

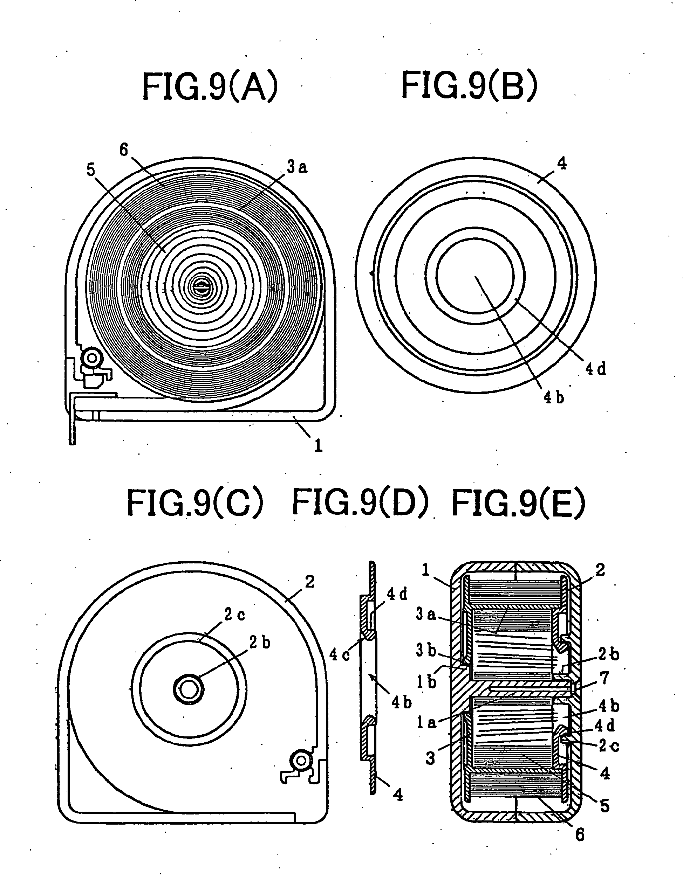

Fig. 9 is a view for illustrating an auto-returning type tape measure, which is the second embodiment of the present invention: Fig. 9(A) is a plan view of the case body with a tape winding drum mounted therein; Fig. 9 (B) is a plan view of the drum cover; Fig. 9(C) is an inside plan view of the case cover; Fig. 9(D) is a sectional view of the drum cover; and Fig. 9 (E) is a sectional view for illustrating the tape measure before drawing the measuring tape from the case.

### PREFERRED EMBODIMENTS OF THE INVENTION

In Figs. 5 to 8, there is illustrated an auto-returning type tape measure according to the first embodiment of the present invention. Fig. 5 is a plan view of the tape measure in an exposed state with a removed cover of a case and a removed cover of a drum. Fig 5(A) is a plan view of the case body with a tape winding drum mounted therein, Fig. 5(B) is a plan view of the drum cover, and Fig. 5(C) is a plan view of the case cover. Fig. 6 illustrates a case cover and a drum cover. Fig 6(A) is an inside view of the case cover, Fig. 6 (B) is a sectional view of the drum cover, Fig. 6(C) is a left side view of the drum cover of Fig. 6(B), and Fig. 6(D) is a right side view of the drum cover of Fig. 6(B). Fig. 7 is a view for illustrating states of drawing a measuring tape from a tape measure case. Fig. 7 (A) illustrates the tape measure before drawing the measuring tape from the case, Fig. 7(B) is a plan view for showing the tape measure of Fig. 7(A) with the covers removed from the case and drum, which corresponds to that of Fig. 5 (A). Fig. 7(C) is a sectional view of the tape measure with a tape drawn full length from the case. Fig. 7(D) is a plan view of the tape measure of Fig. 7 (C) with the covers removed from the case and the drum. Fig. 8 is a view for illustrating the operation of the tape measure. In Figs. 5 to 8, components similar to those shown in Fig. 1 to 4 are given the same symbols and further explanation of those components will be omitted. 2b designates a hollow fitting shaft and 4b designates a relief hole.

In the shown embodiment, a relief hole 4b instead of a bearing hole is made in the center portion of the drum cover 4. The case cover 2 is not provided at its inner surface with a supporting shaft for supporting the center hole of the drum cover but provided with a hollow fitting shaft 2b formed thereat for fitting therein a fixed shaft 1a. Therefore, the relief hole 4b can be left empty in the assembled state of the tape measure. The hollow fitting shaft 2b serves as connection of the fixed shaft 1a with the case cover 2 and also reinforcement of the fixed shaft 1a. This shaft can also prevent the axial displacement of a driving spring 5 but may be omitted. The hollow fitting shaft 2b has an inside diameter large enough to fit the fixed shaft 1a therein and an outside diameter being larger than the diameter of the fixed shaft 1a by the doubled thickness of two or three layers of the driving spring 5 wound on the fixed shaft 1a. Therefore, there is formed a sufficient empty space of the relief hole 4b around the hollow fitting shaft 2b. This clearance (empty space) is of 3 to 11 mm in the radial direction, which may depend upon a full length of a measuring tape 6 stored in the tape measure. The above range of the clearance is adequate to the tape measure storing a measuring tape of 2.5 to 10 meters. The relief hole 4b of the drum cover 4 has a tapered portion 4c at the inside peripheral surface.

Referring to Fig. 8, the operation of the tape measure according to the shown embodiment will be described below. Fig. 8(A) shows the tape measure shown in Fig. 7(A) but in the exposed state with the case cover removed. Fig. 8(B) shows an enlargement of the relief hole portion 4b of the tape measure shown in Fig. 7 (A), indicating that a part of the driving spring 5 falls in the relief hole 4b. In the case body 1 and the drum body 3, as described before with reference to Fig. 4, the fixed shaft 1a has a slightly tapered end inclining to an axial line in the section of the tape measure and the partition wall portion 3a is also slightly tapering on the side for mounting the drum cover 4, which is slightly inclining to an axial line in the section of the tape measure. Fig. 8(B) is an exaggerating illustration of the inclined state of the fixed shaft 1a and the partition wall portion 3a. Since the fixed shaft 1a is tapering, there may be produced a force that may effect the driving spring 5 to be wound around the fixed shaft 1a to move toward the drum cover, i.e., in the direction from the base portion to the tapered end of the fixed shaft 1a as shown in Fig.8(B). As the measuring tape 6 is drawn from the tape measure case, the driving spring 5 is tightened in layers on the fixed shaft 1a while part of turns of the driving spring 5 to be tightly wound the fixed shaft 1a falls in the relief hole 4b provided in the drum cover 4. Since the driving spring 5 is allowed to partially fall in the relief hole 4b, it can be then tightly wound around the fixed shaft 1a without rubbing by the side edge of turns the periphery of the relief hole 4b or striking the inside face of the drum cover 4, not generating unpleasant sound. Since there is a wide clearance between the hollow fitting shaft 2b and the relief hole 4b, the driving spring 5 can not be caught therein and the measuring tape 6 can be smoothly drawn from/into the case of the tape measure. Similarly, the measuring tape 6 drawn out of the case for the measurement can be automatically rewound into the case by the accumulated force of the driving spring 5 without generating unpleasant sound.

From the fact that the tape measure may generate unpleasant sound while the driving spring 5 is tightened and released, it is possible to prevent the generation of noise from the tape measure by the provision of the relief hole 4b whose diameter corresponding to the diameter D of the spring 5 maximally tightened on the fixed shaft when the measuring tape 6 has been drawn full length from the tape measure case. However, in view of the fact that the tape measure is used most for measuring the lengths of about 2 to 3 meters, it is sufficient in practice to provide the relief hole 4b whose diameter is larger than 0.5 times of the diameter D of the driving spring 5 fully tightened on the fixed shaft when the measuring tape 6 has been drawn full length from the tape measure case. However, if the diameter of the relief hole 4b is excessively large, the driving spring 5 may not stably be wound around the fixed shaft 1a. In order to prevent the noise generation, it is sufficient to provide the relief hole 4b whose diameter is of a range of not larger than 1.2 times or preferably 0.8 times of the diameter D of the driving spring 5 maximally tightened around the fixed shaft 1a in the state of the tape measure with the measuring tape 6 fully drawn from the case.

Furthermore, in view of the fact that the tape measure is most frequently used for measurement of lengths of about 2 meters, the relief hole 4b enough to allow the driving spring 5 to fall therein when the measuring tape 6 is drawn by 2 m from the case may effectively prevent in practice the generation of unpleasant sound.

The tapered portion 4c at the inside periphery of the relief hole 4b in the drum cover 4 is effective to allow the driving spring 5 in and out of the relief hole 4b when tightening/releasing the driving spring 5 for drawing the measuring tape 6 out/into the tape measure case. Thus, the measuring tape 6 can be more smoothly drawn from/into the tape measure case without generating unpleasant sound.

Fig. 9 is a view for illustrating a tape measure according to the second embodiment of the present invention. Fig. 9(A) is a plan view of a case body assembled with a drum body, Fig. 9(B) is a plan view of a drum cover, Fig. 9(C) is an inside view of a case cover, Fig. 9(D) is a sectional view of the drum cover and Fig. 9(E) is a sectional view of the tape measure with the measuring tape not drawn from the case and stored therein. In Figs. 9(A) to 9(D), components similar to those shown in Figs. 1 to 8 are given the same symbols and further explanation of those components will be omitted. 2c designates a bearing and 4d designates a supporting shaft.

The shown embodiment differs from the first embodiment of Figs. 5 to 8 merely by the fact that the drum cover 4 is provided with the supporting shaft 4d formed thereat and the case cover 2 is provided at its inside surface with the bearing 2c for supporting the supporting shaft 4d. Therefore, views similar to those of Figs. 5 to 8 are omitted. The supporting shaft 4d is a protrusion formed around a relief hole 4b made in the drum cover 4. The bearing 2c is formed on the inside surface of the case cover 2 for slidably supporting the supporting shaft 4d therein. This bearing 2c is also a protrusion formed on the inside surface of the case to surround the supporting shaft body. Either the supporting shaft 4d or the bearing 2c may be formed of discontinuous (not continuous) protrusion. It is also possible to form the bearing 2c as an outer protrusion and the supporting shaft 4d as an inner protrusion although the shown embodiment has the bearing 2c formed as an outer protrusion and the supporting shaft 4d formed as an inner protrusion. These parts are not limited to the shown protrusions but may also be formed as a combination of a convex groove, a concave groove and a protrusion.

In this embodiment, the drum cover side is also supported, enabling the drum to rotate more stably.

### Industrial Applicability

As is apparent from the foregoing, the auto-returning type tape measure according to the present invention can be used without generating unpleasant sound when drawing the measuring tape from/into the tape measure case.

## Claims

1. A tape measure comprising:
a drum body (3) wherein a side wall is formed on one surface and another surface is opened to be substantially cylindrical, a surrounding surface of the cylinder is a partition wall (3a), the side wall is extended to the outside of the partition wall,
a driving spring (5) is accommodated inside of the partition wall and a measuring tape (6) is wound outside of the partition wall;
a drum cover (4) for covering the opened surface of the drum body; and
a shaft (1a, 2b) disposed in the center portion of the drum body and the drum cover,
**characterised in that** a relief hole (4b) is made in the center portion of the drum cover and has an inside diameter being larger than the outer diameter of the shaft by 3 to 11 mm to form an empty space therein.

2. A tape measure comprising:
a drum body (3) wherein a side wall is formed on one surface and another surface is opened to be substantially cylindrical, a surrounding surface of the cylinder is a partition wall (3a), the side wall is extended to the outside of the partition wall,
a driving spring (5) is accommodated inside of the partition wall and a measuring tape (6) is wound outside of the partition wall;
a drum cover (4) for covering the opened surface of the drum body; and
a shaft (1a, 2b) disposed in the center portion of the drum body and the drum cover,
**characterised in that** a relief hole (4b) is made in the center portion of the drum cover and has an inside diameter being larger than 0.5 times and not larger than 1.2 times of the outer diameter of a tightened coil of the driving spring to form a empty space therein in the state when the measuring tape was drawn full length from the tape measure case.

3. A tape measure comprising:
a drum body (3) wherein a side wall is formed on one surface and another surface is opened to be substantially cylindrical, a surrounding surface of the cylinder is a partition wall (3a), the side wall is extended to the outside of the partition wall,
a driving spring (5) is accommodated inside of the partition wall and a measuring tape (6) is wound outside of the partition wall;
a drum cover (4) for covering the opened surface of the drum body; and
a shaft (1a, 2b) disposed in the center portion of the drum body and the drum cover,
**characterised in that** a relief hole (4b) is made in the center portion of the drum cover and has an inside diameter large enough to allow a part of the driving spring to fall therein in the state when the driving spring is tightened by drawing the measuring tape by 2 meters from the tape measure case.

4. A tape measure as defined in any of claims 1 to 3, **characterised in that** the relief hole has a tapered portion (2c) formed at the inside periphery thereof.

5. A tape measure as defined in any of claims 1 to 4, **characterised in that** the drum cover is provided at its external surface with a step or protrusion formed at a specified radius and the step is used as a bearing (2c) or a supporting shaft (4d).

## Patentansprüche

1. Bandmaß, das umfasst:
einen Trommelkörper (3), wobei eine Seitenwand an einer Fläche ausgebildet ist und eine andere Fläche offen und im Wesentlichen zylindrisch ist, eine den Zylinder umgebende Fläche eine Trennwand (3) ist, sich die Seitenwand zur Außenseite der Trennwand erstreckt, eine Triebfeder (5) im Inneren der Trennwand aufgenommen ist und ein Messband (6) auf die Außenseite der Trennwand aufgewickelt ist;
eine Trommelabdeckung (4), die die offene Fläche des Trommelkörpers abdeckt; und
eine Welle (1a, 2b), die in dem Mittelabschnitt des Trommelkörpers und der Trommelabdeckung angeordnet ist,
**dadurch gekennzeichnet, dass** ein Ausgleichsloch (4b) in dem Mittelabschnitt der Trommelabdeckung hergestellt ist und einen Innendurchmesser hat, der um 3 bis 11 mm größer ist als der Außendurchmesser der Welle, so dass ein leerer Raum darin ausgebildet ist.

2. Bandmaß, das umfasst:
einen Trommelkörper (3), wobei eine Seitenwand an einer Fläche ausgebildet ist und eine andere Fläche offen und im Wesentlichen zylindrisch ist, eine den Zylinder umgebende Fläche eine Trennwand (3) ist, sich die Seitenwand zur Außenseite der Trennwand erstreckt, eine Triebfeder (5) im Inneren der Trennwand aufgenommen ist und ein Messband (6) auf die Außenseite der Trennwand aufgewickelt ist;
eine Trommelabdeckung (4), die die offene Fläche des Trommelkörpers abdeckt; und
eine Welle (1a, 2b), die in dem Mittelabschnitt des Trommelkörpers und der Trommelabdeckung angeordnet ist,
**dadurch gekennzeichnet, dass** ein Ausgleichsloch (4b) in dem Mittelabschnitt der Trommelabdeckung hergestellt ist und einen Innendurchmesser hat, der mehr als 0,5-mal und
nicht mehr als 1,2-mal größer ist als der Außendurchmesser einer gespannten Wicklung der Triebfeder, so dass ein leerer Raum darin in dem Zustand ausgebildet ist, in dem das Messband über volle Länge aus dem Bandmaßgehäuse herausgezogen ist.

3. Bandmaß, das umfasst:
einen Trommelkörper (3), wobei eine Seitenwand an einer Fläche ausgebildet ist und eine andere Fläche offen und im Wesentlichen zylindrisch ist, eine den Zylinder umgebende Fläche eine Trennwand (3) ist, sich die Seitenwand zur Außenseite der Trennwand erstreckt, eine Triebfeder (5) im Inneren der Trennwand aufgenommen ist und ein Messband (6) auf die Außenseite der Trennwand aufgewickelt ist;
eine Trommelabdeckung (4), die die offene Fläche des Trommelkörpers abdeckt; und
eine Welle (1a, 2b), die in dem Mittelabschnitt des Trommelkörpers und der Trommelabdeckung angeordnet ist,
**dadurch gekennzeichnet, dass** ein Ausgleichsloch (4b) in dem Mittelabschnitt der Trommelabdeckung hergestellt ist und einen Innendurchmesser hat, der groß genug ist, um zuzulassen, dass ein Teil der Triebfeder in dem Zustand hineinfallen kann, in dem die Triebfeder gespannt ist, wenn das Messband um 2 Meter aus dem Bandmaßgehäuse herausgezogen ist.

4. Bandmaß nach einem der Ansprüche 1 bis 3, **dadurch gekennzeichnet, dass** das Ausgleichsloch einen konischen Abschnitt (2c) aufweist, der an seinem Innenumfang ausgebildet ist.

5. Bandmaß nach einem der Ansprüche 1 bis 4, **dadurch gekennzeichnet, dass** die Trommelabdeckung an ihrer Außenfläche mit einem Absatz oder Vorsprung versehen ist, der an einem bestimmten Radius ausgebildet ist, und der Absatz als ein Lager (2c) oder eine Trageachse (4d) dient.

## Revendications

1. Mètre ruban comportant :
un corps de tambour (3), dans lequel une paroi latérale est réalisée sur une surface, et une autre surface est ouverte pour être sensiblement cylindrique, une surface entourant le cylindre constitue une paroi de cloisonnement (3a), la paroi latérale se prolonge vers l'extérieur de la paroi de cloisonnement, un ressort d'entraînement (5) est inséré dans la paroi de cloisonnement et un ruban de mesure (6) est enroulé à l'extérieur de la paroi de cloisonnement ;
un capot de tambour (4) destiné à couvrir la surface ouverte du corps de tambour ; et
un arbre (1a, 2b) disposé dans la partie centrale du corps de tambour et du capot de tambour,
**caractérisé en ce qu'**un trou de dégagement (4b) est ménagé dans la partie centrale du capot de tambour et possède un diamètre intérieur supérieur de 3 à 11 mm au diamètre extérieur de l'arbre pour former à l'intérieur un espace vide.

2. Mètre ruban, comportant :
un corps de tambour (3), dans lequel une paroi latérale est réalisée sur une surface, et une autre surface est ouverte pour être sensiblement cylindrique, une surface entourant le cylindre constitue une paroi de cloisonnement (3a), la paroi latérale se prolonge vers l'extérieur de la paroi de cloisonnement, un ressort d'entraînement (5) est inséré dans la paroi de cloisonnement et un ruban de mesure (6) est enroulé à l'extérieur de la paroi de cloisonnement ;
un capot de tambour (4) destiné à couvrir la surface ouverte du corps de tambour ; et
un arbre (1a, 2b) disposé dans la partie centrale du corps de tambour et du capot de tambour,
**caractérisé en ce qu'**un trou de dégagement (4b) est ménagé dans la partie centrale du capot de tambour et possède un diamètre intérieur supérieur à 0,5 fois et non inférieur à 1,2 fois le diamètre extérieur d'une bobine serrée du ressort d'entraînement pour former à l'intérieur un espace vide dans l'état où le ruban de mesure a été étiré sur toute sa longueur à partir du boîtier de mètre ruban.

3. Mètre ruban, comportant :
un corps de tambour (3), dans lequel une paroi latérale est réalisée sur une surface, et une autre surface est ouverte pour être sensiblement cylindrique, une surface entourant le cylindre constitue une paroi de cloisonnement (3a), la paroi latérale se prolonge vers l'extérieur de la paroi de cloisonnement, un ressort d'entraînement (5) est inséré dans la paroi de cloisonnement et un ruban de mesure (6) est enroulé à l'extérieur de la paroi de cloisonnement ;
un capot de tambour (4) destiné à couvrir la surface ouverte du corps de tambour ; et
un arbre (1a, 2b) disposé dans la partie centrale du corps de tambour et du capot de tambour,
**caractérisé en ce qu'**un trou de dégagement (4b) est ménagé dans la partie centrale du capot de tambour et possède un diamètre intérieur suffisamment important pour permettre à une partie du ressort d'entraînement d'y entrer dans l'état où le ressort d'entraînement est serré en étirant le ruban de mesure de 2 mètres à partir du boîtier de mètre ruban.

4. Mètre ruban selon l'une des revendications 1 à 3, **caractérisé en ce que** le trou de dégagement possède une partie fuselée (2c) réalisée sur sa périphérie intérieure.

5. Mètre ruban selon l'une des revendications 1 à 4, **caractérisé en ce que** le capot de tambour est placé sur sa surface externe avec une avancée ou une saillie réalisée à une valeur de rayon spécifique, et l'avancée est utilisée comme un palier (2c) ou un arbre support (4d).
